# EUROPEAN PATENT APPLICATION

(11) **EP 2 573 752 A1**
(43) Date of publication of application: **27.03.2013**
(21) Application number: 11783297.2
(22) Date of filing: 28.01.2011
(51) Int. Cl.: G09G 3/36, G02F 1/133, G09G 3/20

(54) **DISPLAY DEVICE AND METHOD OF DRIVING THE SAME, AND DISPLAY SYSTEM**

(30) Priority: 21.05.2010 JP 2010117804
(71) Applicant: Sharp Kabushiki Kaisha, Osaka-shi, Osaka 545-8522 (JP)
(72) Inventor: SAITOH, Kohji, Osaka-shi, Osaka 545-8522 (JP); YANAGI, Toshihiro, Osaka-shi, Osaka 545-8522 (JP); OZAKI, Masami, Osaka-shi, Osaka 545-8522 (JP)
(74) Representative: Goddar, Heinz J.
(86) International application number: PCT/JP2011/051789
(87) International publication number: WO 2011/145360

(57) **Abstract**

In a method of the invention for driving a display device including (i) a scanning line driving circuit for line sequentially selecting scanning signal lines and (ii) a signal line driving circuit including an output circuit for supplying electric currents, the signal line driving circuit configured to sequentially supply data signals to corresponding pixels on a selected scanning signal line via the output circuit and data signal lines, the method includes (i) outputting, in response to horizontal synchronization and vertical synchronization signals, a horizontal synchronization control signal shorter in cycle than the horizontal synchronization signal and outputting a vertical synchronization control signal, (ii) performing scanning for supplying the data signals to all pixels on the scanning signal lines within one vertical period defined by the vertical synchronization control signal and (iii) performing capacity control lowering capacity of the output circuit after the scanning has finished within the single vertical period.

## Description

### Technical Field

The present invention relates to (i) a display device capable of reducing power consumption and (ii) a method of driving the display device, and (iii) a display system.

### Background Art

In recent years, display devices of thin, light and low power consumption which are exemplified by liquid crystal display devices have been extensively used. These display devices have been popularly adopted, for example in mobile phones, smart phones and laptop personal computers. In addition, development and use of electric paper which is a thinner display device are expected to be accelerated in the future. Under such circumstances, reducing power consumption in various kinds of display devices has become a common object at present.

The Patent Literature 1 discloses a method of driving a display device capable of realizing reduction of power consumption by setting a quiescent period, which is a non-scanning period longer than a scanning period in which a screen is scanned one time, so that the quiescent period allows all scanning signal lines to be in a state of non-canning

### Citation List

### Patent Literature

Patent Literature 1
   Japanese Patent Application Publication Tokukai, No. 2001-312253 A (Publication Date: November 9, 2001)

### Summary of Invention

### Technical Problem

However, the technique disclosed in Patent Literature 1 has the following problems.

The technique disclosed in Patent Literature 1 realizes reduction of power consumption by setting a non-scanning period i.e., a quiescent period, which is longer than a scanning period. The single vertical period is longer than a conventional single vertical period because sum of the scanning period and the non-scanning period makes up a single vertical period. As a result, the number of times for refreshing a screen per unit time becomes smaller. As a result, a driving frequency (refresh rate) of the pixels becomes low. This low refresh rate easily causes a flicker on a screen of a display panel, depending on properties of the display panel.

In addition, the low refresh rate means reduction in the number of images displayable per second. Therefore, a moving image can not be displayed smoothly when the refresh rate is low. Usually, when the refresh rate is 60 Hz, 60 images are refreshed per second. In this case, if the scanning period is set to one frame, and the non-scanning period is set to two frames with employing the technique disclosed in Patent Literature 1, the refresh rate becomes 20 Hz, which is one third of the usual refresh rate. In other words, in this case, only 20 images can be refreshed per second, and this causes jumpiness in displaying the moving image. As a result, according to Patent Literature 1, it is difficult to display a moving image in particular.

The present invention has been made in view of the above problems, and an object of the present invention is to provide (i) a method of driving a display device, and (ii) a liquid crystal display device, the method and the liquid crystal display device being capable of displaying a moving image without causing a flicker, and also being capable of reducing power consumption.

### Solution to Problem

In order to attain the above object, a display device in accordance with the present invention, is a display device which displays a screen made of pixels arranged in matrix including: (i) a scanning line driving circuit for line-sequentially selecting a plurality of scanning signal lines; (ii) a signal line driving circuit including an output circuit for supplying electric currents, the signal line driving circuit being configured to sequentially supply data signals to corresponding pixels on a selected scanning signal line via the output circuit and a plurality of data signal lines; (iii) synchronization signal output means for outputting, in response to an inputted horizontal synchronization signal, a horizontal synchronization control signal having a shorter cycle than a cycle of the horizontal synchronization signal and outputting a vertical synchronization control signal in response to an inputted vertical synchronization signal; and (iv) capacity control means for lowering capacity of the output circuit after the signal line driving circuit has supplied the data signals to all pixels on the plurality of scanning signal lines in response to the horizontal synchronization control signal within one vertical period defined by the vertical synchronization control signal.

According to the arrangement, the synchronization signal output means generates and outputs the horizontal synchronization control signal and the vertical synchronization control signal in response to the inputted horizontal synchronization signal and vertical synchronization signal. The horizontal synchronization control signal and the vertical synchronization control signal are signals which synchronize the scanning line driving circuit and the signal line driving circuit. The cycle of the horizontal synchronization control signal is shorter than the cycle of the inputted horizontal synchronization signal. This makes possible for the scanning line driving circuit to select all scanning signal lines and the signal line driving circuit to supply data signals to all pixels on the plurality of scanning signal lines within a shorter period than a single vertical period defined by the vertical synchronization control signal.

Note here that a period in which the signal line driving circuit supplies data signals to all pixels on the scanning signal lines in the single vertical period is called a scanning period. Further, a period after the scanning period has passed in the single vertical period is called a non-scanning period.

According to the arrangement, in the non-scanning period, it is possible to cut off electric current flowing in the output circuit because the output circuit is in a low capacity state. This causes average consumption current in the signal line driving circuit to be smaller than a conventional signal line driving circuit. Note that, in particular, in a case where steady current flows in the output circuit, which is a usual case, the average consumption current can be small.

Accordingly, it is possible for the display device of the present invention to hold a sufficient quiescent period within a single vertical period without extending the single vertical period longer than a conventional period. Therefore, it is not necessary to lower the frequency of the scanning period per unit time than a conventional frequency. As a result, the display device of the present invention is capable of displaying a moving image without causing a flicker and working effectively for reducing power consumption.

In order to attain the above object, a method of driving the display device in accordance with the present invention is a method in which the display device including: (i) a scanning line driving circuit for line sequentially selecting a plurality of scanning signal lines; and (ii) a signal line driving circuit including an output circuit for supplying electric currents, the signal line driving circuit being configured to sequentially supply data signals to corresponding pixels on a selected scanning signal line via the output circuit and a plurality of data signal lines, and which method includes: (i) outputting, in response to an inputted horizontal synchronization signal, a horizontal synchronization control signal with a shorter cycle than the cycle of the horizontal synchronization signal and outputting, in response to an inputted vertical synchronization signal, a vertical synchronization control signal; (ii) performing scanning in which the signal line driving circuit is caused to supply the data signals to all pixels on the plurality of scanning signal lines in response to the horizontal synchronization control signal within one vertical period defined by the vertical synchronization control signal; and (iii) performing capacity control for lowering capacity of the output circuit after the scanning process has finished within the single vertical period.

According to the method, it is possible to have an effect similar to the display device in accordance with the present invention.

Additional objects, features and strengths of the present invention will be made clear by the description below. Further, the advantages of the present invention will be evident from the following explanation in reference to the drawings.

### Advantageous Effects of Invention

A display device in accordance with the present invention is capable of displaying a moving image without causing a flicker and at the same time, reducing power consumption.

### Brief Description of Drawings

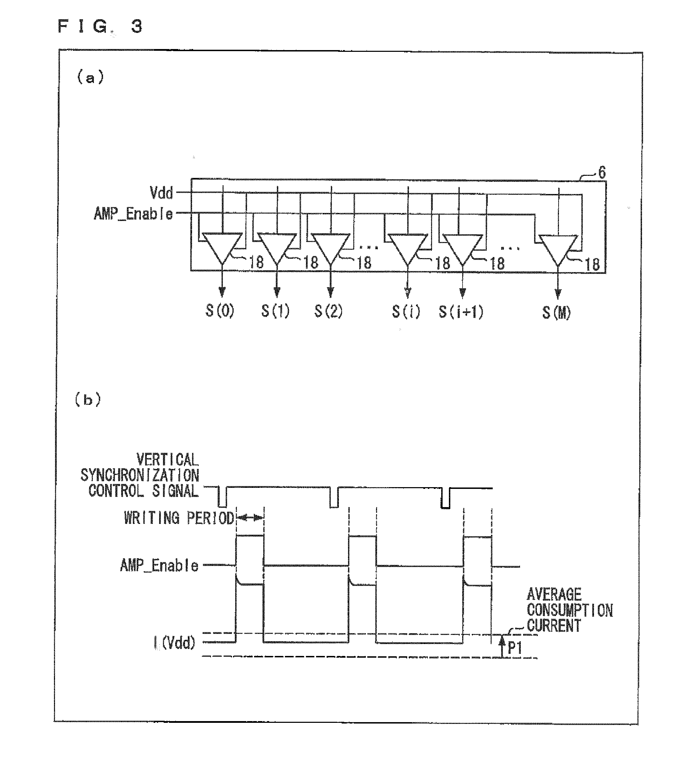

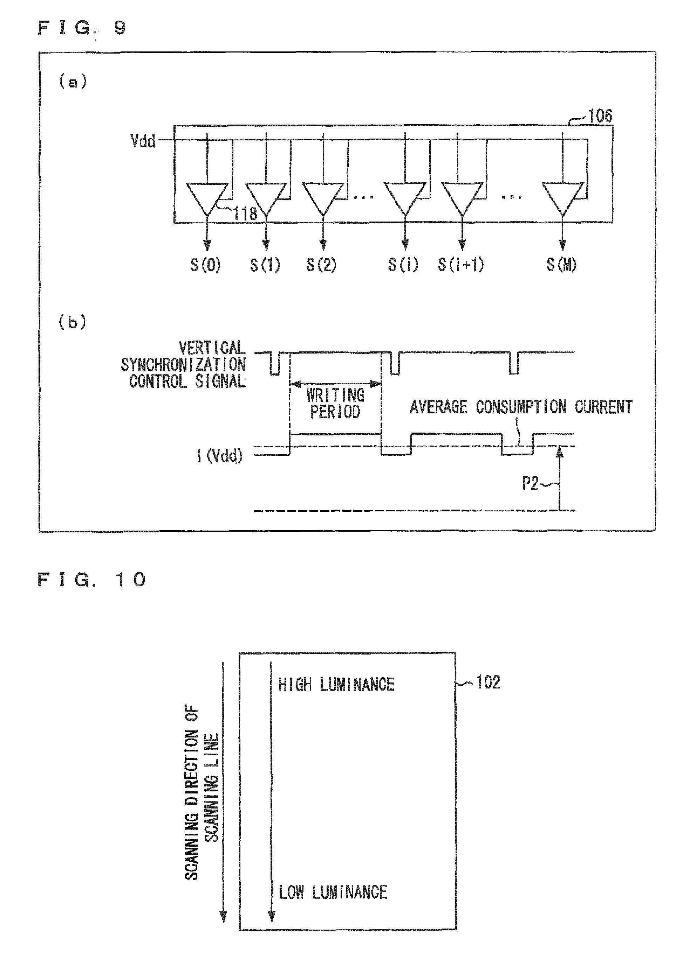

Fig. 1

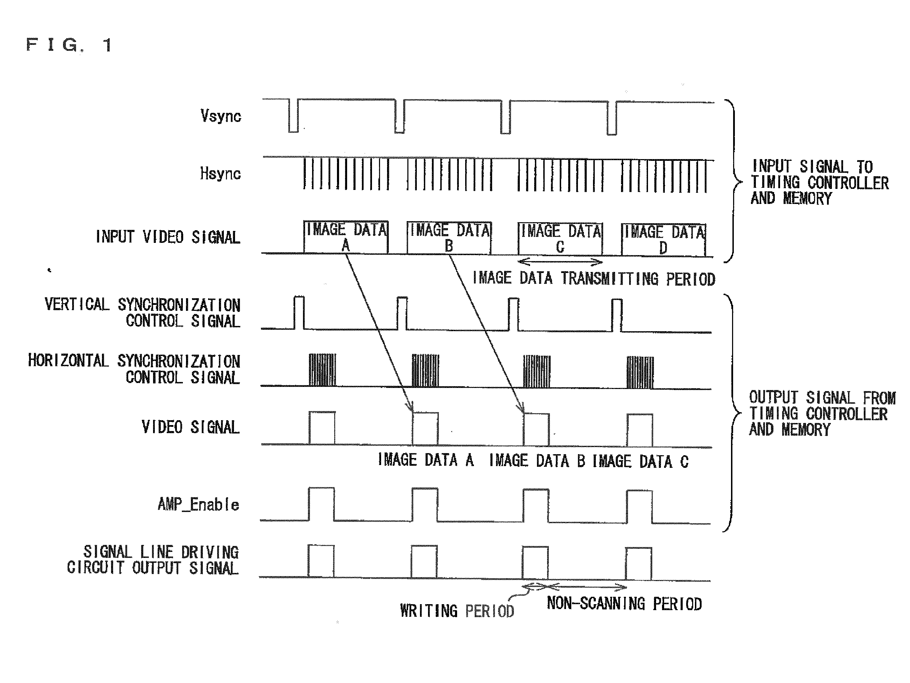

   Fig. 1 shows signal waveforms in driving a display panel of a display device in accordance with a first embodiment of the present invention.
Fig. 2

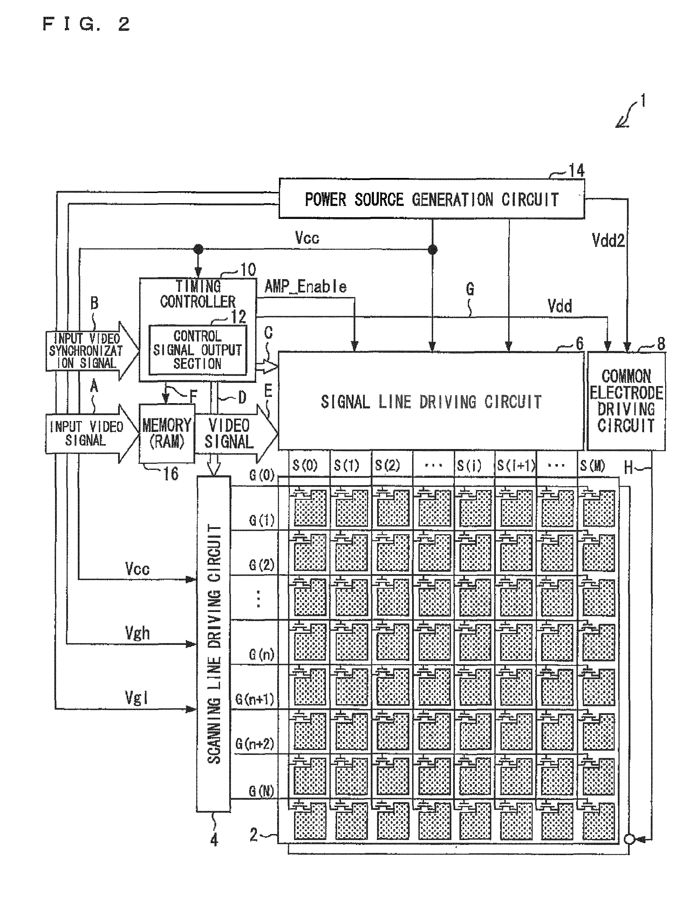

   Fig. 2 is an overall view showing the display device in accordance with the first embodiment of the present invention.
Fig. 3
   (a) of Fig. 3 is a block diagram showing an internal configuration, in particular an output-relating portion, of a signal line driving circuit. (b) of Fig. 3 shows a waveform of an AMP_Enable signal and a waveform of electric current consumption of the signal line driving circuit.
Fig. 4 Fig. 4 is a timing chart showing an effect of the first embodiment of the present invention compared with a conventional art.
Fig. 5 Fig. 5 is a circuit diagram of a circuit configuration of a display device in accordance with a second embodiment of the present invention.
Fig. 6 Fig. 6 is a circuit diagram of a circuit configuration of a display device in accordance with a third embodiment of the present invention.
Fig. 7 Fig. 7 shows signal waveforms in driving a touch panel of the display device in accordance with the third embodiment of the present invention.
Fig. 8 Fig. 8 is a circuit diagram showing another example of the circuit configuration illustrated in Fig. 6.
Fig. 9
   (a) of Fig. 9 is a block diagram showing an internal configuration, in particular an output-relating portion, of a signal line driving circuit in a conventional display device.
   (b) of Fig. 9 shows a waveform of electric current consumption of a signal line driving circuit in the conventional display device.
Fig. 10 Fig. 10 shows a display device of the conventional display device.

### Description of Embodiments

### [Embodiment 1]

The following description discusses, with reference to Figs. 1 to 4, a first embodiment of the present invention.

### (1. Arrangement of display device 1)

The following description discusses an arrangement of a display device (liquid crystal display device) 1 in accordance with the present embodiment with reference to Fig. 2. Fig. 2 is an overall view showing the display device 1. As shown in Fig. 2, the display device 1 includes a display panel 2, a scanning line driving circuit (gate driver) 4, a signal line driving circuit (source driver) 6, a common electrode driving circuit 8, a liming controller (synchronization signal output means, polarity inversion means) 10, a power source generation circuit 14, and a memory (storage means) 16. The timing controller 10 further includes a control signal output section (capacity control means) 12.

The display panel 2 includes (i) a screen made up of a plurality of pixels arranged in matrix, (ii) n (n is any integer) scanning signal lines G (gate line) for scanning the screen by line-sequentially selecting the screen, (iii) m (m is any integer) data signal lines S (source line) for supplying a data signal to pixels included in the selected line. The scanning signal lines G and the data signal lines S intersect with each other.

In Fig. 2, G(n) represents an n-t (n is any integer) scanning signal line G. For example, G(1), G(2) and G(3) represent a first, a second and a third scanning signal lines G, respectively. On the other hand, S(i) represents an i-th (i is any integer) data signal line S. For example, S(1), S(2) and S(3) represent a first, a second and a third data signal line S, respectively.

Note that, for the sake of easy description, the present embodiment discusses driving of an equivalent circuit as an example. A TFT is provided on each pixel in the display panel 2, and a drain of the TFT is connected to a pixel electrode (not shown).

The scanning line driving circuit 4 line-sequentially scans each scanning signal line G from top to bottom of the screen. During the scanning, the scanning line driving circuit 4 outputs a rectangular wave (scanning signal) to the scanning signal lines G so as to turn ON switching devices (TFT) provided on the respective pixels and connected to the respective pixel electrodes. As a result, the pixels of one line in the screen are put in a selected state.

The signal line driving circuit 6 receives a video signal (arrow E) from the memory 16. Based on the video signal, the signal line driving circuit 6 finds values of voltages to be supplied to the respective pixels on the selected line. Then, the signal line driving circuit 6 outputs the voltages of the values to the respective data signal lines S. As a result, an image data (data signal) is supplied to each pixel on the selected scanning signal line G.

The display device 1 further includes a common electrode (COM: not shown) for each pixel in the screen. The common electrode driving circuit 8 drives the common electrode by outputting predetermined common voltage to the common electrode in response to a polarity inversion signal (arrow G) inputted from the timing controller 10.

The timing controller 10 receives a horizontal synchronization signal (Hsync) and a vertical synchronization signal (Vsync) as input video synchronization signals (arrow B). Based on these input video synchronization signals, the timing controller 10 generates a horizontal synchronization control signal (GCK or the like) and a vertical synchronization control signal (GSP or the like) as video synchronization signals which serve as references for synchronized operation of each circuit. The timing controller 10 outputs the horizontal synchronization control signal and the vertical synchronization control signal correspondingly to the scanning line driving circuit 4, the signal line driving circuit 6 and the memory 16 (arrow C, arrow D, arrow F).

The horizontal synchronization control signal is used by the signal line driving circuit 6 as an output timing signal for controlling timing at which the signal line driving circuit 6 outputs to the display panel 2 an inputted video signal that the signal line driving circuit 6 received from the memory 16. The horizontal synchronization control signal is also used by the scanning line driving circuit 4 as a timing signal for controlling timing at which the scanning line driving circuit 4 outputs a scanning signal to the display panel 2. On the other hand, the vertical synchronization control signal is used by the scanning line driving circuit 4 as a timing signal for controlling timing at which the scanning line driving circuit 4 starts scanning of a scanning signal line G.

Note that, in this Description, except in special circumstances, "a single vertical period" means a period defined by the vertical synchronization control signal and "a single horizontal period" means a period defined by the horizontal synchronization control signal.

Respectively in response to the horizontal synchronization control signal and the vertical synchronization control signal transmitted from the timing controller 10, the scanning line driving circuit 4 starts scanning of the display panel 2 and outputs the scanning signal to the scanning signal lines G sequentially selected.

In response to the horizontal synchronization control signal transmitted from the timing controller 10, the signal line driving circuit 6 writes image data (data signal) into each data signal line S of the display panel 2, the image data being based on a video signal inputted from the memory 16.

The power source generation circuit 14 generates Vdd, Vdd2, Vcc, Vgh and Vgl, which are voltages required to cause respective circuits in the display device 1 to operate. The power source generation circuit 14 outputs Vcc, Vgh and Vgl to the scanning line driving circuit 4, Vdd and Vcc to the signal line driving circuit 6, Vcc to the timing controller 10, and Vdd2 to the common electrode driving circuit 8.

The memory 16 has a function for storing an inputted input video signal (arrow A). Further, the memory 16 outputs the video signal (arrow E) based on the stored input video signal to the signal line driving circuit 6 in response to the video synchronization signal transmitted from the timing controller 10.

### (2. Power consumption in conventional display device)

The following description discusses problems of power consumption in a conventional display device with reference to Fig. 9. (a) of Fig. 9 is a block diagram showing an internal configuration of an output section of a signal line driving circuit 106, and (b) of Fig. 9 shows a waveform of electric current consumption (I (Vdd)) of the signal line driving circuit 106. Taking a display device with a usual resolution WSVGA(1024RGB × 600) as an example, the signal line driving circuit 106 of such a display device requires 1024×3(RGB) = 3072 analog amplifiers 118. Each analog amplifier 118 is a device which outputs a data signal to a data signal line S. In each analog amplifier 118, a continuous steady electric current of approximately 0.01 mA flows to secure output capacity of the analog amplifier 118.

Accordingly, the total amount of the continuous steady electric current of the 3072 analog amplifiers 118 is approximately 30.7 mA. A voltage source (Vdd) supplied to the signal line driving circuit 106 is usually approximately 10V, therefore the signal line driving circuit consumes 10V×30.7 mA=307 mW power. As a result, average consumption current becomes a value indicated by the arrow P2 in (b) of Fig.9, and this value accounts for a great amount of power consumption of the whole display device, thereby being one of the great causes of preventing the display device from having lower power consumption.

### (3. Power consumption in display device 1)

The display device in the present embodiment works with a smaller average power, compared with the conventional display device described above. The following description discusses this point.

### < Operation of analog amplifier 18>

The following description discusses the analog amplifier (output circuit) 18 in the signal line driving circuit 6 with reference to Fig. 3. (a) of Fig. 3 is a block diagram showing an internal configuration, in particular an output section of a signal line driving circuit 6, and (b) of Fig. 3 shows a waveform of an AMP_Enable signal.

As shown in (a) of Fig. 3, in the signal line driving circuit 6, each analog amplifier 18 is provided for corresponding one of the data signal lines S. Therefore, the signal line driving circuit 6 of the present embodiment has M analog amplifiers 18. That is, the number of analog amplifiers 18 is equal to the number of data signal lines S.

The signal line driving circuit 6 further includes an AMP_Enable signal line so as to input an AMP_Enable signal to each analog amplifier 18. The AMP_Enable signal line is connected to a control signal output section 12 of the timing controller 10. Further, in the signal line driving circuit 6, the AMP_Enable signal line is connected in parallel to each analog amplifier 18.

As described above, Vdd is a source of voltage supplied from the power source generation circuit 14 in the display device 1, and each analog amplifier 18 including the signal line driving circuit 6 operates with the supply of Vdd.

The control signal output section 12 of the timing controller 10 outputs the AMP_Enable signal which is a control signal for designating an operation state of each analog amplifier 18 to each analog amplifier 18 of the signal line driving circuit 6 at a predetermined timing. The analog amplifier 18 operates when the AMP_Enable signal is at H value, and stops when the AMP_Enable signal is at L value.

As described later, according to the display device 1, a single vertical period defined by a vertical synchronization control signal is divided into a scanning period and a non-scanning period in order to drive display panel 2. As shown in (b) of Fig. 3, the control signal output section 12 sets the AMP_Enable signal at H value in the scanning period in order to operate the analog amplifier 18. Further, the control signal output section 12 sets the AMP_Enable signal at L value in the non-scanning period in order to stop the analog amplifier 18.

### < Signal waveform >

The following description discusses each signal waveform in driving the display panel 2 with reference to Fig. 1. Fig. 1 shows signal waveform in driving the display panel 2 of the display device 1 in accordance with one embodiment of the present invention.

The upper part of Fig. 1 shows an input signal to be inputted to the timing controller 10 and the memory 16. For example, a vertical synchronization signal (Vsync) and a horizontal synchronization signal (Hsync) are inputted to the timing controller 10 as an input video synchronization signal. An input video signal is inputted to the memory 16 at the same time as the input video synchronization signal is inputted to the timing controller 10. A transmission period in which image data for one frame of the input video signal is transmitted corresponds to one vertical period defined by the Hsync.

Further, the lower part of Fig. 1 shows an output signal outputted by the timing controller 10 and the memory 16.

For example, the timing controller 10 generates a horizontal synchronization control signal and a vertical synchronization control signal based on the inputted input video synchronization signal, the horizontal synchronization control signal and a vertical synchronization control signal serving as video synchronization signals which serve as references for synchronized operation of each circuit. Note that, the timing controller 10 generates the vertical synchronization control signal whose cycle is the same as the inputted Vsync cycle, and the horizontal synchronization control signal whose cycle is shorter than the inputted Hsync cycle. In Fig. 1, the cycle of the generated horizontal synchronization control signal corresponds to one third of the Hsync cycle. The timing controller 10 outputs the thus generated horizontal synchronization control signal and vertical synchronization control signal to a scanning line driving circuit 4, the signal line driving circuit 6 and the memory 16 as an image synchronization signal.

Herein, in a single vertical period, a scanning which corresponds to one frame is carried out within a shorter period (scanning period) than the single vertical period because the cycle of the horizontal synchronization control signal is short. Note that, the cycle of the horizontal synchronization control signal is not limited to the example. For example, it is preferable that the cycle of the horizontal synchronization control signal is one over an integral number of that of the Hsync (i.e., frequency of the horizontal synchronization control signal is an integral multiple of that of the Hsync}.

Based on the input video signal stored therein, the memory 16 outputs a video signal in response to the inputted vertical synchronization control signal and horizontal synchronization control signal. A transmission period of image data for one frame of the video signal corresponds to the scanning period.

The control signal output section 12 synchronizes with generated vertical synchronization control signal and horizontal synchronization signal and then outputs the AMP_Enable signal.

Further, the signal line driving circuit 6 supplies the data signal to the data signal lines S, while the AMP_Enable signal remains at H value.

### < Driving of display panel 2>

The following description discusses the driving of the display panel 2 controlled by each signal described above with reference to Fig. 1.

The display device 1 is configured such that the vertical synchronization control signal is inputted every single vertical period. At first, in sync with the vertical synchronization control signal, the control signal output section 12 changes voltage of the AMP_Enable signal from L value to H value. As a result, the analog amplifiers 18 in the signal line driving circuit 6 are switched to be in a state of operation (normal state) from a state of non-operation.

Next, in sync with the vertical synchronization control signal and the horizontal synchronization control signal, the scanning line driving circuit 4 outputs a scanning signal to a first scanning signal line G. As a result, a gate of a TFT of each pixel connected to the scanning signal line G (1) becomes ON.

Next, in sync with the horizontal synchronization control signal, the signal line driving circuit 6 line-sequentially outputs a data signal for each data signal line S from the analog amplifier 18 connected to the data signal line S. As a result, voltage required for displaying is supplied to each data signal line S, and the voltage is written into a pixel electrode on the scanning signal line G (1) via the TFT. After the writing has finished, the TFT gate of the pixels connected to the scanning signal line G (1) returns to OFF from ON.

After the first single horizontal period has passed, the next vertical synchronization control signal is inputted. Writing for pixels connected to the second and subsequent scanning signal lines G is carried out in the same way as the writing for the pixels connected to the first scanning signal line G. A period in which pixels of all N scanning signal lines G are written is referred to as a writing period. The writing period is the same as the scanning period.

During the writing period, the AMP_Enable signal remains at H value.

During the first single vertical period, after the writing period (scanning period) has passed, the control signal output section 12 changes the value of the AMP_Enable signal to the L value from the H value. As a result, the analog amplifier 18 switches to be in a state of non-operation.

After the first single vertical period has passed, the next vertical synchronization control signal is inputted. The same process is carried out for driving in the second and subsequent frames according to the same step as the above.

Note that, while the analog amplifier 18 is in a state of non-operation, an output terminal of the analog amplifier 18 is disconnected from the data signal line S (i). The data signal line S (i) may be in a state of electrically floating or being connected to Vdd etc, as described later in detail.

### <Working effects>

According to the arrangement, during the non-scanning period, steady electric current of the analog amplifier 18 is stopped. As a result, an average consumption current becomes a value indicated by the arrow P1 in (b) of Fig. 3, and this value is much smaller than the average electric current consumption (arrow P2 in (b) of Fig. 9) of a conventional display device. Further, by holding some quiescent periods within a single scanning period, electric current which momentary flows in switching a scanning state and a non-scanning state can also be saved as much as possible. Accordingly, with regard to the display device 1, power consumption can be reduced compared with the conventional display device.

Next, the following description further discusses the effects of the present embodiment in detail with regarding a conventional display device as a comparative example 1, and a display device in the Patent Literature 1 as a comparative example 2. In each example, the number of the scanning signal lines G is N scanning signal lines.

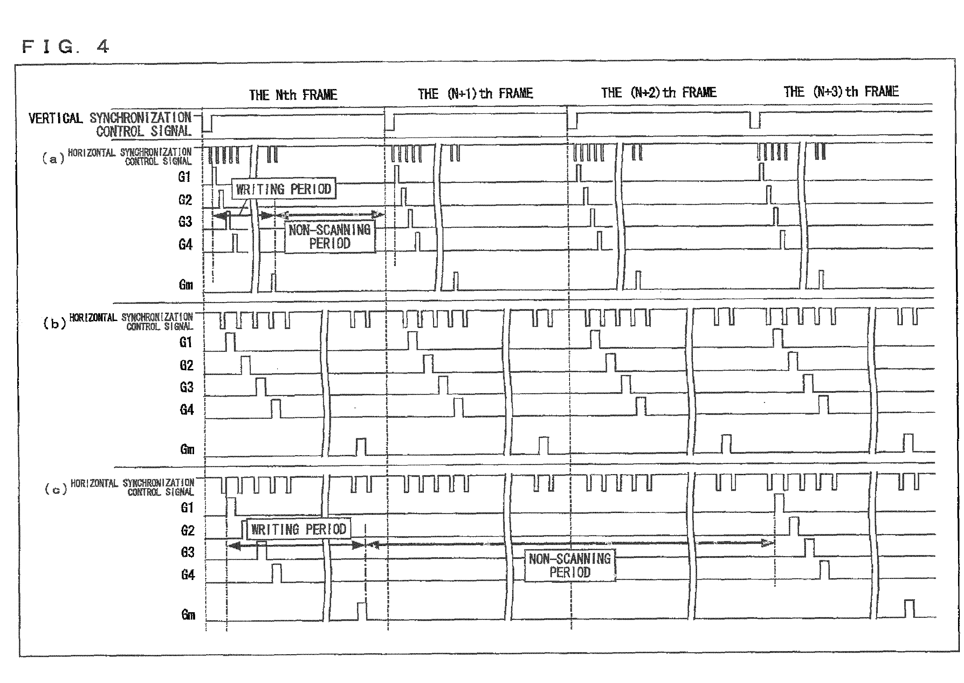

Fig. 4 shows each signal waveform of the vertical synchronization control signal, the horizontal synchronization control signal, and the scanning signals. (a) of Fig. 4 shows the present embodiment, (b) of Fig. 4 shows the comparative example 1 and (c) of Fig. 4 shows the comparative example 2.

According to the comparative example 1, as shown in (b) of Fig. 4, a scanning period corresponds to a single vertical period. Therefore, in the comparative example 1, a signal line driving circuit has to keep consuming steady power.

According to the comparative example 2, as shown in (c) of Fig. 4, a scanning period is the same as the scanning period of the comparative example 1, however a quiescent period which is longer than the scanning period is held after the scanning period. Accordingly, in the comparative example 2, a single vertical period corresponds to a few times of the single vertical period of the comparative example 1. That is, it makes difficult to fluently display a moving image because a frequency of the scanning period per unit time has decreased.

According to the present embodiment, as shown in (a) of Fig. 4, a single vertical period is the same as the single vertical period of the comparative example 1. However, in the present embodiment, a single horizontal period is shorter than a single horizontal period of the comparative example 1 and the comparative example 2 (In Fig. 4, the single vertical period corresponds to 1/2 of the comparative examples 1 and 2), and then the scanning period in accordance with the present embodiment is shorter than the scanning period of the comparative examples 1 and 2. That is, the display device 1 scans all pixels within a period shorter than the single vertical period.

Therefore, with reference to Figs. 4 (a) and 4(b), it can be understood that the present embodiment makes it possible that a sufficient quiescent period (non-scanning period) can be held within a single vertical period without reducing the number of the scanning periods per unit time to less than that of the conventional art. During this quiescent period, it is possible to reduce power consumption.

Note that, according to the present embodiment, the single horizontal period, i.e., the time period in which data signal lines S (1) to S (M) writes electric charge into each pixel in a certain scanning signal line G is shorter than that of the conventional art (comparative examples 1 and 2) time. However, use of a silicon-made TFT, which has been recently developed with greatly improved capacity makes it possible that electric charge required to display can be written into pixels even in a short single horizontal period as described above.

As such a TFT, for example, a TFT (see Japanese Patent Application Publication Tokukai, No. 2010-98305 A etc.) constituting a semiconductor layer by combining indium, gallium and zinc oxide is mentioned.

### (4. Luminance distribution in conventional display device)

Next, the following description discusses problems of a luminance distribution in the traditional display device with reference to Fig. 10. Fig. 10 shows the luminance distribution in a normaly black type display panel 102.

A liquid crystal display device has a parasitic capacitance between a pixel electrode and a data signal line S, and in a case of a frame inversion driving, the parasitic capacitance causes an in-plane luminance distribution on a display panel. Reasons for the generation of the in-plane luminance distribution can be understood by considering the relationship among (i) voltage of the data signal line S in a certain frame (positive polarity writing) and the next frame (negative polarity writing), (ii) drain voltage of pixels in the top row to be scanned first in the frame, and (iii) drain voltage of pixels in the bottom row to be scanned finally in the frame. The following description discusses specifically this on the assumption that, for example, the liquid crystal display device displays an image of same gradation all over on a full screen.

A scanning signal line G1 is scanned at the beginning of one vertical period in a certain frame, and TFTs connected to the data signal line G1 are turned ON, so that voltages of predetermined (positive) values from the data signal lines S are applied to drain electrodes of the TFTs, respectively. In the same frame, the same voltage keeps being outputted to the data signal lines S because the liquid crystal display device is the frame inversion driving type. Then, in the next frame, a polarity inversion is carried out. Thus, the scanning signal line G1 is scanned again while voltages of predetermined (negative) values are outputted to the data signal line S. Thus, with respect to the scanning signal line G1, the voltage in the data signal line S is constant during the most part of time period as long as the single scanning period, after the scanning.

Further, a scanning signal line Gn of the bottom row is scanned at the end of a single vertical period in a certain frame, and TFTs connected to the scanning signal line Gn are turned ON, so that voltages of predetermined (positive) values from the data signal lines S are applied to the drain electrodes of the TFTs, respectively. Soon after that, the frame is switched to the next frame, and in the next frame, a polarity inversion is carried out. Thus, voltages of predetermined (negative) values are outputted to the data signal lines S. Thus, with respect to the scanning signal line Gn, the voltages of the data signal lines S switch to the opposite polarity soon after the scanning of a certain frame, so that parasitic capacitance causes fluctuation of the drain voltage. In this manner, a state in which the fluctuating of the drain voltage (a state in which the voltage becomes different from the predetermined positive voltage) continues for a single vertical period.

According to this mechanism, the drain voltage differs between the top and the bottom rows in a retention period after the scanning. Further, this phenomenon caused by the mechanism is not limited to the top and the bottom rows, but occurs depending on how long the time period between the time the scanning is wished and the time at which polarity inversion occurs in the voltage applied to the data signal line S.

Therefore, according to the traditional display device, as shown in Fig. 10, a luminance gradient occurs from the top to bottom of the screen.

### (5. Luminance distribution in display device 1)

Here, the display device 1 is again assumed that a common electrode driving circuit 8 also carries out a frame inversion driving for inverting the polarity of a data signal line S for each single vertical period in response to a polarity inversion signal.

Herein, as described above, in the display device 1, scanning which corresponds to one frame can be finished in a shorter period than one vertical period. As a result, in inverting a frame, a period until the polarity inversion is carried out in the top row after the scanning of the frame becomes almost equal with that in the bottom row. Therefore, the generation of the luminance distribution on a display panel 2 can be reduced.

Note that, it is further preferable that line inversion driving for allowing applied polarity to be an inverse polarity is carried out for each data adjoining each other signal line S. Specifically, in a certain frame, positive polarity voltage is applied to the even-numbered data signal line S, and negative polarity voltage is applied to the odd-numbered data signal line S. In the next frame, opposite polarity voltage is applied to each of the data signal lines S. As a result, a flicker can be spatially offset in switching the positive and negative polarity so as to reduce the generation of a flicker in the display panel 2.

### (Other configurations)

### <In a case where gradation amplifier is provided>

In the present invention, the number of analog amplifier 18 is not necessarily identical with the number of data signal lines S. For example, in a case where a type of constituting the analog amplifiers 18 for each gradation is adopted, the number of the analog amplifiers 18 can be smaller than the number of the data signal lines S. For example, in driving a display panel 2, it is possible to connect the data signal line S (i) connected to pixels on a selected scanning signal line G to the analog amplifier 18 which outputs voltage corresponding to the gradation displayed by the pixels.

In such a case, also, the driving method described above can be carried out so as to make possible to reduce steady electric current in the non-scanning period, and as a result, reduction of power consumption can be realized.

### < Connecting point of data signal line S (i) in non-scanning period>

In the non-scanning period, a connecting point of a data signal line S (i) may be inconstant, or any power source.

For example, in the non-scanning period, the data signal line S (i) may be in a state of electrically floating. In this case, in the non-scanning period (period in which an AMP_Enable signal is at L Value), the connection between an analog amplifier 18 and the data signal line S (i) is cut off, and the connecting point of the data signal line S (i) is inconstant.

Further, in the non-scanning period, the data signal line S (i) may be connected to a common Vdd. In this case, in the non-scanning period, the connection between the analog amplifier 18 and the data signal line S (i) is cut off, and each of data signal lines S (i) is connected to a common voltage power source (Vdd). As a result, voltage outputted to the data signal line S (i) decreases by a certain value from the peak, and then securely retains the value after a scanning period has finished, i.e., after the AMP_Enable signal has changed from H value to L value. As a result, in the non-scanning period, it is possible to retain a stable display because voltage outputted to the data signal line S becomes stable.

Note that, the data signal line S (i) in the non-scanning period is connected not limited to any voltage source (Vdd), but may be connected to a ground (GND), or a common node. In any case, it is possible to stabilize voltage outputted to the data signal line S in the non-scanning period.

### < Example of changing timing>

According to the display device 1, in a case where the analog amplifier 18 returns from a state of non-operation to a state of operation, s certain amount of time is required before the analog amplifier 18 can work normally. Thus, in a case where timing for returning the analog amplifier 18 and timing for starting the next scanning period are equal to each other, a condition of a signal outputting to the data signal line S from the analog amplifier 18 becomes unstable. As a result, there will be a possibility to apply originally unintended voltage to pixels.

Then, according to the display device 1, it is preferable to set timing for returning the analog amplifier 18 from a state of non-operation to a state of operation earlier than timing for starting the next scanning period. In this manner, after time has passed since the analog amplifier 18 returned from a state of non-scanning and becomes stable, the next scanning period starts. As a result, it makes possible to apply normal voltage to the pixels

### (Additional matters)

In the non-scanning period, in a case where at least one of analog amplifiers 18 in a signal line driving circuit 6 stops working, it makes possible to display a moving image with low power consumption. Working all analog amplifiers 18 is preferable because it allows power consumption to decrease the most.

A starting point of the non-scanning period is not limited to the point immediately after the scanning of one frame has finished, but it may be so arranged that the starting point of the non-scanning period is slightly later the scanning. On the other hand, the finishing point of the on-scanning period is not limited to the point at which a single vertical period has finished and also not limited to a point slightly before the single vertical period finishes. That is, a period of any length between the points at which the scanning period has finished and the single vertical period has finished can be the non-scanning period.

According to the non-scanning period, not the analog amplifier 18 alone stops working. That is, capacity of some circuit group (element group) in which steady electric current flows including the analog amplifier 18 may be reduced. As an example of such a circuit group, for example, there are a DAC (Digital-Analogue-Converter) circuit section defining voltage for each of the gradations and a Vdd generation circuit section.

According to the display device 1, as described above, it is possible to realize reduction of power consumption by reducing the capacity (driving capacity) of the analog amplifier 18 during the non-scanning period. However, stopping (Off) completely the analog amplifier 18 enables power consumption to decrease the most. Thus, according to the display device 1, "stopping the analog amplifier 18" can bring the effect of the present invention, instead of "reducing the driving capacity of the analog amplifier 18." Note that, a state in which the capacity of the analog amplifier 18 is the lowest corresponds to a state in which the analog amplifier 18 stops working.

### [Embodiment 2]

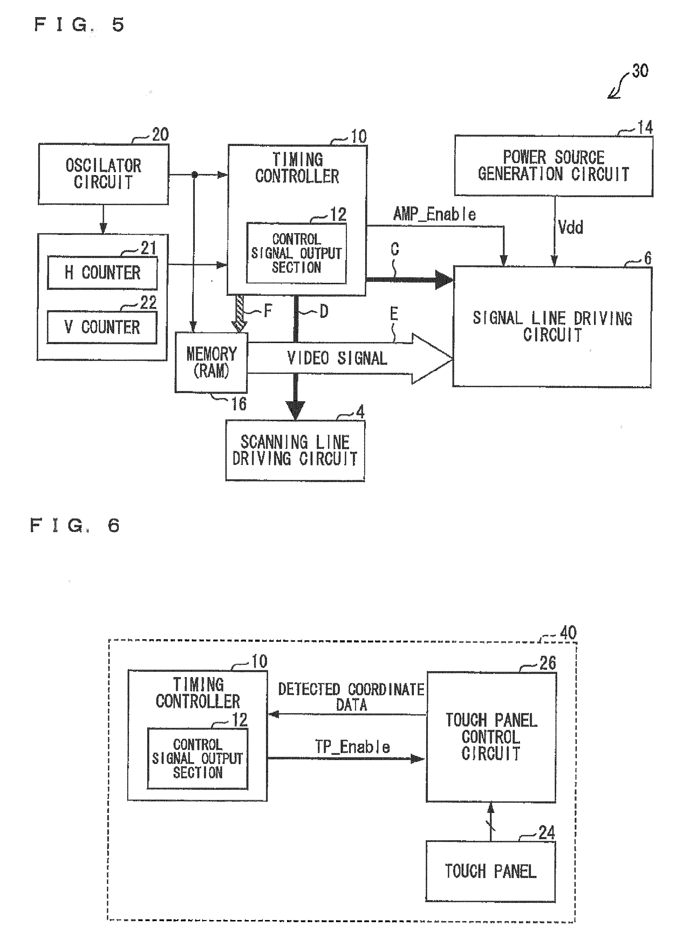

The following description discusses a second embodiment of the present invention with reference to Fig. 5. Fig. 5 is a circuit diagram of a display device 30 in accordance with second embodiment of the present invention. Note that, in Fig. 5, a display panel 2 is omitted.

A main difference of the present embodiment from the first embodiment is in that the display device 30 further includes an oscillator circuit 20, an H counter 21 and a V counter 22, and is configured to carry out control so as to output a video signal previously stored in a memory 16 to a signal line driving circuit 6.

Accordingly, the following mainly discusses the differences. Note that, the same reference numbers are given to constitution elements having the same functions as those of the first embodiment.

The oscillator circuit 20 is a circuit for oscillating a dot clock (clock signal). The dot clock oscillated by the oscillator circuit 20 is supplied to a timing controller 10 and the H counter 21.

The H counter 21 generates an Hsync in response to the supplied dot clock, and supplies the Hsync to the timing controller 10 and the V counter 22. The V counter 22 generates a Vsync from supplied Hsync and supplies the Vsync to the timing controller 10.

The timing controller 10 generates a horizontal synchronization control signal (GCK and the like) and a vertical synchronization control signal (GSP and the like) as a video synchronization signal in response to the supplied dot clock, Vsync and Hsync, and outputs the horizontal synchronization control signal and the vertical synchronization control signal to a scanning line driving circuit 4, the signal line driving circuit 6 and the memory 16.

According to the present embodiment, the memory 16 previously stores the video signal which is transmitted to the signal line driving circuit 6. The memory 16 can transmit the video signal stored in the memory 16 to the signal line driving circuit 6 by the frame in response to the video synchronization signal received from the timing controller 10.

According to the arrangement, even in a case where the input video synchronization signal and the input image data are not inputted to the display device 30, the display device 30 can display an video by holding a non-scanning period in a single vertical period.

Further, the display device 30 in accordance with the present embodiment requires power so that the oscillator circuit 20, the H counter 21 and the V counter 22 consumes, however the display device 30 does not require the input image data to be inputted to the memory 16 each time of displaying. As a result, power consumption for the writing is reduced. Further, power consumed by a set side to input the input video synchronization signal and the input image data to a display device 1 in the first embodiment is reduced in the present embodiment. Therefore, an electronic device as a whole including the display device 30 in accordance with the present embodiment realizes reduction of power consumption.

### (Operation of display device 30)

In accordance with the display device 30, it is further preferable to set a Vsync frequency generated by the V counter 22 to 60Hz or more to prevent from generating a luminance distribution.

Specifically, in a case where the input video synchronization signal and the input image data is not inputted to the display device 30, it is preferable that the oscillator circuit 20 oscillates a dot clock to cause the Vsync frequency generated by the V counter 22 to be 60Hz or more. As a result, similarly to the Vsync, a vertical synchronization control signal with a high frequency of 60Hz or more is generated, and in the display device 30, polarity inversion of a data signal line S is carried out in the high frequency of 60 Hz or more.

Herein, as the case of the first embodiment, in the former part of the single vertical period, a single frame is scanned in the display device 30.

According to the arrangement, in inverting a frame, a polarity inversion frequency becomes so fast that less flicker is generated.

### [Embodiment 3]

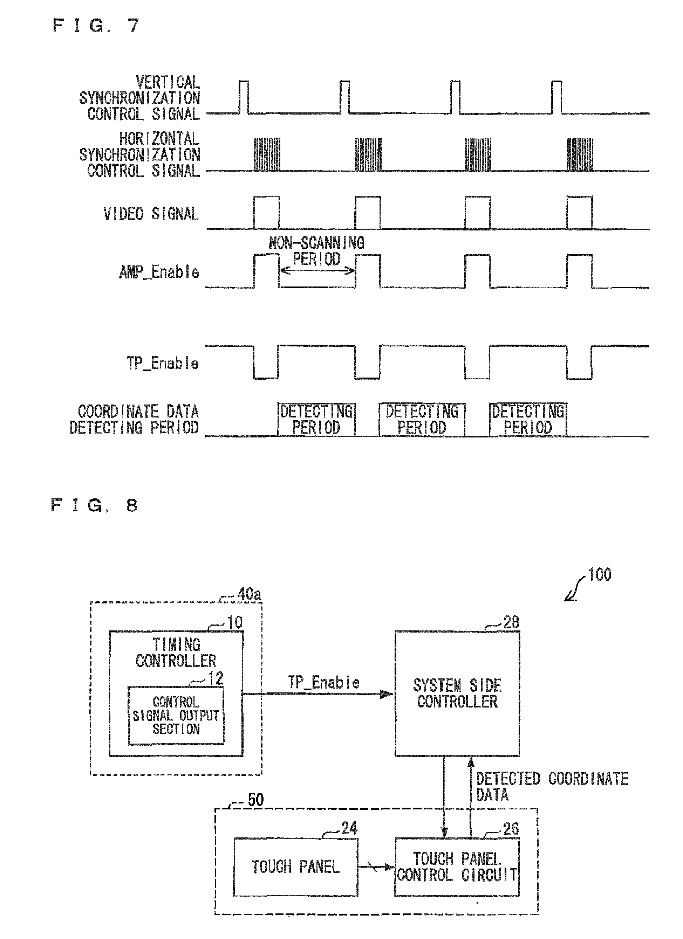

The following description discusses the third embodiment of the present invention with reference to Figs. 6 and 7.

### (1.Arrangement of display device 40)

Fig. 6 schematically shows the arrangement of the display device 40 in accordance with the third embodiment of the present invention.

The main difference between the first embodiment and the present embodiment, is that a display device 40 is an integrated touch panel type display device further including a touch panel 24 and a touch panel control circuit 26.

The following description mainly discusses the difference. Note that, the same reference numbers are given to constituent elements having the same junctions as those of the first embodiment.

The touch panel 24 is arranged so as to face a display panel 2, and the touch panel 24 is a panel configured to accept a touch input (touching a certain position on a screen with a finger or a pen for the touching) on the screen of the display panel 2. The touch panel 24 accepts the touch input on the screen, and generates a signal (input signal) corresponding to the position and sends the signal to the touch panel control circuit 26. The touch panel 24 may be a capacitance type touch panel or an electromagnetic induction type touch panel. Note that, the description for the specific arrangement of the touch panel 24 is omitted because the touch panel 24 can be a known touch panel.

The touch panel control circuit 26 is a circuit, which constitutes a touch input detecting section (touch input detecting means) with the touch panel 24. The touch panel control circuit 26 detects the input signal sent from the touch panel 24 after the touch input, generates coordinate data indicative of a position (coordinate) of the touch input on the display panel 2 based on the detected input signal, and sends the coordinate data to a timing controller 10.

According to the present embodiment, the timing controller 10 may have a function for receiving the coordinate data sent from the touch panel control circuit 26, and recognizing, based on the coordinate data, operation commanded by the touch input and controlling other members and devices and the like in response to the result of the recognition.

### (2. Noise in touch input detection in accordance with conventional display device)

The following description discusses a problem of the touch input detection in accordance with the conventional display device.

Generally, in driving a display device functioning as a touch panel input device, a noise generated by the driving a display panel causes a problem that a touch position detecting accuracy of a touch panel is lowered. In a conventional liquid crystal display device, measures, for example, holding an additional circuit to prevent the noise from generating and/or making a gap between the display panel and the touch panel are taken. However, such measures could be costly and/or be an obstacle to downsize the device.

Specifically, in a case where the touch panel is a capacitance type touch panel, capacitance is generated between ITO of the touch panel and a common electrode (COM). Therefore, the touch position detection likely causes a noise corresponding to a change of an electric potential of a COM signal.

Further, in a case where the touch panel is an electromagnetic induction type touch panel, the touch panel reads changes of an electronic field and/or magnetic field when a pen for the touching moves on a front side of the display panel. However, constant changes of the electric field and/or magnetic field caused by a polarity inversion of the display panel results in a noise between the pen for the touching and the touch panel.

### (3. Touch input detection in display device 40)

A display device 40 in accordance with the present embodiment can detect a touch input on a touch panel 24 accurately without being influenced by a noise caused by driving of a display panel 2. The following discusses this point.

According to the present embodiment, a touch panel control circuit 26 further includes a TP_nable signal line so as to accept a TP-Enable signal from a timing controller 10. This signal line is connected to a control signal output section 12 of the timing controller 10.

The control signal output section (detecting control means) 12 of the timing controller 10 outputs the TP_Enable signal to the touch panel control circuit 26 at regular timing. The TP_Enable signal is a control signal so that the touch panel control circuit 26 prescribes a detecting state for detecting an input signal from the touch panel 24.

Specifically, as shown in Fig. 7, the control signal output section 12 sets voltage of the TP_nable signal at H value (high value) corresponding to timing of setting voltage of an AMP_Enable signal at L value (low value), and then sets voltage of the TP_Enable signal at L value corresponding to timing of setting voltage of the AMP_Enable signal at value.

The touch panel control circuit 26 works in a case where the TP_Enable signal is at H value and stops working in a case where the TP_Enable signal is at L value.

According to the driving, as shown in Fig. 7, the touch panel control circuit 26 is controlled so as to detect the input signal from the touch panel 24 during a non-scanning period. During the non-scanning period, the touch panel control circuit 26 can detect the input signal without receiving a driving noise from the display panel 2 because main circuits of the display device 1 stop working. As a result, accuracy of the coordinate data can be prevented from becoming worse.

### (Modification)

The present invention is not limited to the arrangement in which a display device 40 includes a touch panel 24 and a touch panel control circuit 26. For example, as shown in Fig. 8, the present invention may be realized as a display system 100 (information input device etc.) which includes a display device 40a and a touch input detecting device 50 (touch panel 24 and touch panel control circuit 26) respectively.

According to an example shown in Fig. 8, a system side controller 28 mediates between the display device 40a and the touch input detecting device 50. Specifically, the system side controller 28 receives a TP_Enable signal outputted by a control signal output section 12 of the display device 40a and controls the touch panel control circuit 26 of the touch input detecting device 50. The touch panel control circuit 26 is controlled so as to detect an input signal from the touch panel 24 during a non-scanning period.

Further, the system side controller 28 receives coordinate data from the touch panel control circuit 26, recognizes an operation etc. indicated by a touch input based on the coordinate data and then controls other members and devices and the like in response to the result of the recognition.

In accordance with the present example, also, similarly to the embodiment shown in Fig. 7, the touch panel control circuit 26 can detect an input signal without being influenced by a driving noise caused by a display device 2 and prevent accuracy of the coordinate data from becoming worse.

Further, the display device in accordance with the present invention is preferably arranged such that the capacity control means stops the output circuit after the capacity control means stops the output circuit after the signal line driving circuit has supplied the data signals to all pixels on the plurality of scanning signal lines in response to the vertical synchronization control signal in the one vertical period.

According to the arrangement, it is possible to further reduce power consumption.

Further, in the display device in accordance with the present invention, it is preferable that a cycle of the horizontal synchronization control signal is one over an integral number of that of the horizontal synchronization signal.

According to the arrangement, it makes possible to generate the horizontal synchronization control signal of a short cycle with a simple circuit arrangement.

Further, the display device in accordance with the present invention is preferably arranged such that the display device further includes storage means for storing a video signal inputted therein, the storage means being configured to output the stored video signal to the signal line driving circuit in response to the horizontal synchronization control signal,

According to the arrangement, it is possible to input the video signal to a signal line driving circuit appropriately in sync with the horizontal synchronization control signal.

Further, the display device in accordance with the present invention is preferably arranged such that the display device further includes an oscillator circuit for generating a clock signal; and a counter for generating the horizontal synchronization signal and the vertical synchronization signal in response to the clock signal and outputting the horizontal synchronization signal and the vertical synchronization signal to the synchronization signal output means.

According to the arrangement, even in the case where there is no video input from outside, the horizontal synchronization signal and the vertical synchronization signal are generated in response to the clock signal generated by the oscillator circuit. As a result, the horizontal synchronization control signal and the vertical synchronization control signal are generated so as to allowing video data stored in the storage means to be displayed. That is, it is possible to display a stored moving image with low power consumption without generating a flicker.

Further, the display device in accordance with the present invention is preferably arranged such that the display device further includes polarity inversion means for inverting polarities of the plurality of data signal lines every vertical period.

According to the arrangement, it is possible to realize reduction of power consumption without generating a luminance distribution caused by a frame inversion driving on a screen because a scanning has finished in the former part of a single vertical period:

Further, the display device in accordance with the present invention is preferably arranged such that the polarity inversion means is further configured to invert the polarities of the data signal lines in such a manner that data signal lines adjoining each other have opposite polarity.

According to the arrangement, it is possible to prevent a flicker from generating because a source inversion driving is carried out.

Further, the display device in accordance with the present invention is preferably arranged such that the display device further includes touch input detecting means for detecting a touch input to a screen of the display panel and detecting control means for causing the touch input detecting means to carry out detecting operation while the capacity of the output circuit is lowered within the one vertical period.

According to the arrangement, the touch input detecting means detects coordinate data of the touch input in a non-scanning period by being controlled by a capacity control means. Main circuits and the like of the display device stop working during the non-scanning period. Therefore, it is possible for the touch input detecting means to detect the coordinate data without receiving a driving noise of the display panel, and prevent accuracy of detecting from becoming worse.

Further, the display device in accordance with the present invention is preferably arranged such that the touch input detecting means includes a capacitance type touch panel or an electromagnetic induction type touch panel.

According to the arrangement, it is possible to realize the display device with more effectively preventing accuracy of detecting from becoming worse.

Further, a display system in accordance with the present invention includes (i) the display device, (ii) the touch input detecting means for detecting the touch input to the screen of the display panel and (iii) the detecting control device for causing the touch input detecting means to carry out detecting operation while the capacity of the output circuit is lowered within the single vertical period.

According to the arrangement, the touch input detecting device detects the coordinate data of the touch input in the non-scanning period by being controlled by the capacity control means. Main circuits and the like of the display device stop working during the non-scanning period. Therefore, it is possible for the touch input detecting device to detect the coordinate data without receiving the driving noise of the display panel, and accuracy of detection from becoming worse.

Note that the present invention is not limited to the foregoing embodiments, but rather can be applied in many variations within the scope of the claims. That is, a new embodiment obtained from a proper combination of various embodiments with disclosed technical means is also included in technical scope of the present invention.

The embodiments described in the foregoing description of embodiments and examples serve solely to illustrate the technical details of the present invention, which should not be narrowly interpreted within the limits of such embodiments and concrete examples, but rather can be applied within the spirit of the present invention and the scope of the patent claims set forth below.

### Industrial Applicability

The present invention is extensively applicable to various kinds of display devices such as liquid crystal display devices, organic electroluminescence display devices and electronic paper.

### Reference Signs List

- 1, 30, 40: Display device
- 2: Display panel
- 4: Scanning line driving circuit
- 6: Signal line driving circuit
- 8: Common electrode driving circuit
- 10: Timing controller (synchronization signal output means, polarity inversion means)
- 12: Control signal output section (capacity control means, detecting control means)
- 14: Power source generation circuit
- 16: Memory (storage means)
- 18: Analog amplifier (output circuit)
- 20: Oscillator circuit
- 21: H counter (counter)
- 22: V counter (counter)
- 24: Touch panel (touch input detecting means)
- 26: Touch panel control circuit (touch input detecting means)
- 28: System side controller
- 50: Touch input detecting device
- 100: Display system
- G: Scanning signal line
- S: Data signal line

## Claims

1. A display device displaying a screen made of pixels arranged in matrix comprising:
a scanning line driving circuit for line-sequentially selecting a plurality of scanning signal lines;
a signal line driving circuit including an output circuit for supplying electric currents, the signal line driving circuit being configured to sequentially supply data signals to corresponding pixels on a selected scanning signal line via the output circuit and a plurality of data signal lines;
synchronization signal output means for outputting in response to an inputted horizontal synchronization signal, a horizontal synchronization control signal having a shorter cycle than a cycle of the horizontal synchronization signal and outputting a vertical synchronization control signal in response to an inputted vertical synchronization signal; and
capacity control means for lowering capacity of the output circuit after the signal line driving circuit has supplied the data signals to all pixels on the plurality of scanning signal lines in response to the horizontal synchronization control signal within one vertical period defined by the vertical synchronization control signal.

2. The display device as set forth in claim 1, wherein:
the capacity control means stops the output circuit after the signal line driving circuit has supplied the data signals to all pixels on the plurality of scanning signal lines in response to the vertical synchronization control signal in the one vertical period.

3. A display device of claim 1 or claim 2, wherein:
a cycle of the horizontal synchronization control signal is one over an integral number of that of the horizontal synchronization signal.

4. A display device according to any one of claims 1 through 3, further comprising:
storage means for storing a video signal inputted therein,
the storage means being configured to output the stored video signal to the signal line driving circuit in response to the horizontal synchronization control signal.

5. The display device of claim 4 further comprising:
an oscillator circuit for generating a clock signal; and
a counter for generating the horizontal synchronization signal and the vertical synchronization signal in response to the clock signal and outputting the horizontal synchronization signal and the vertical synchronization signal to the synchronization signal output means.

6. A display device according to any one of claims 1 through 5, further comprising:
polarity inversion means for inverting polarities of the plurality of data signal lines every vertical period.

7. The display device of claim 6, wherein:
the polarity inversion means is further configured to invert the polarities of the data signal lines in such a manner that data signal lines adjoining each other have opposite polarity.

8. A display device according to any one of claims 1 through 7, further comprising:
touch input detecting means for detecting a touch input to the screen; and
detecting control means for causing the touch input detecting means to carry out detecting operation while the capacity of the output circuit is lowered within the one vertical period.

9. The display device of claim 8, wherein:
the touch input detecting means includes a capacitance type touch panel or an electromagnetic induction type touch panel.

10. A display system comprising:
a display device recited in any one of claims 1 through 7;
a touch input detecting device for detecting a touch input to the screen; and
detecting control means for causing the touch input detecting means to carry out detecting operation while the capacity of the output circuit is lowered within the single vertical period.

11. A method of driving a display device,
the display device including:
a scanning life driving circuit for line sequentially selecting a plurality of scanning signal lines; and
a signal line driving circuit including an output circuit for supplying electric currents, the signal line driving circuit being configured to sequentially supply data signals to corresponding pixels on a selected scanning signal line via the output circuit and a plurality of data signal lines,
the method comprising:
outputting, in response to an inputted horizontal synchronization signal, a horizontal synchronization control signal with a shorter cycle than the cycle of the horizontal synchronization signal and outputting, in response to an inputted vertical synchronization signal, a vertical synchronization control signal;
performing scanning in which the signal line driving circuit is caused to supply the data signals to all pixels on the plurality of scanning signal lines in response to the horizontal synchronization control signal within one vertical period defined by the vertical synchronization control signal; and
performing capacity control for lowering capacity of the output circuit after the scanning process has finished within one vertical period.
